# EUROPÄISCHE PATENTSCHRIFT

(11) **EP 3 434 379 B1**
(45) Veröffentlichungstag und Bekanntmachung des Hinweises auf die Patenterteilung: **12.10.2022**
(21) Anmeldenummer: 17182717.3
(22) Anmeldetag: 24.07.2017
(51) Int. Cl.: B07B 7/00, B07B 9/02, B07B 11/04, B65G 53/60

(54) **VERFAHREN UND VORRICHTUNG ZUR ABSCHEIDUNG VON FEINEN PARTIKELN IN EINEM FLACHABSCHEIDER**
METHOD AND DEVICE FOR SEPARATION OF FINE PARTICLES IN A FLAT SEPARATOR
PROCÉDÉ ET DISPOSITIF DE SÉPARATION DE PARTICULES FINES DANS UN SÉPARATEUR PLAT

(43) Veröffentlichungstag der Anmeldung: 30.01.2019
(73) Patentinhaber: Zeppelin Systems GmbH, 88045 Friedrichshafen (DE)
(72) Erfinder: Winkhardt, Guido, 88326 Aulendorf (DE); Heep, Michael, 88250 Weingarten (DE); Baier, Hermann, 88097 Eriskirch (DE); Hilebrand-Rist, Thomas, 88048 Friedrichshafen-Ettenkirch (DE); Feder, Björn, 88074 Meckenbeuren (DE); Spielvogel, Pia, 88048 Friedrichshafen (DE); Schladebach, Paul, 88677 Markdorf (DE)
(74) Vertreter: Riebling, Peter

(56) Entgegenhaltungen:
- EP-A1- 2 465 617
- DE-A1- 3 700 684
- US-A- 4 657 667

## Beschreibung

Die Erfindung betrifft ein Verfahren und eine Vorrichtung zur Abscheidung von feinen Partikeln aus granulatförmigen Schüttgütern in einer Rohrleitung mit einem Sichter nach dem Oberbegriff des Patentanspruches 1.

Ein derartiges Verfahren und eine nach dem Verfahren arbeitende Vorrichtung ist mit dem Gegenstand der auf den gleichen Anmelder zurückgehenden EP 2 465 617 B1 bekannt geworden. Die bekannte Vorrichtung war als Rohrleitungssichter ausgebildet, der aufgrund seiner Bau- und Funktionsweise als "Rundmodell" bezeichnet wird. Der bekannte Rohrleitungssichter zeichnet sich dadurch aus, dass im Innenraum des Gehäuses ein konusförmiger mit jeweils einander entgegengesetzt gerichteten Spitzen angeordneter Innenkörper befestigt ist, was allerdings mit Nachteilen verbunden ist.

Die Befestigung des Innenkörpers im Innenraum des Gehäuses war schwierig, weil einerseits die Reinigungsluft durch den, den Granulatstrom führenden Ringspalt hindurchgeführt werden muss, was mit Strömungsverlusten verbunden war.

Aufgrund der Rundform des Gehäuses musste der konusförmige, rundzylindrisch profilierte Innenkörper jeweils oben und unten im Innenraum des Gehäuses mit abstandshaltenden Streben befestigt werden, die jedoch unerwünschte Strömungshindernisse für den dort einlaufenden Produktstrom bildeten.

Somit bestand bei dem Rohrleitungssichter nach dem Gegenstand der EP 2 465 617 B1 der Nachteil, dass die Inneneinbauten (Innenkegel, Innenrohr) über Streben abstandshaltend an der Gehäusewand befestigt werden mussten.

Die hierfür verwendeten Stützkonstruktionen behindern die Partikelströmung im Ringquerschnitt. Ferner musste im Rundmodell die Reinigungstuftmenge über radial am Rohrleitungssichter ansetzende Flanschstutzen in den Innenraum eingeleitet werden.

Dabei durchgreift der Flanschstutzen den das Medium führenden Ringquerschnitt. Somit stört auch der Flanschstutzen die Partikelströmung im Ringkanal. Die Partikel können an diesem Flanschstutzen abprallen und bilden dann in unerwünschter Weise ein sogenanntes Spritzkorn, was die Abreinigung des Granulats stört.

Ebenso war die Reinigung des Innenraumes eines Rohrleitungssichters (Rundmodell) nach dem Stand der Technik mit Nachteilen im Hinblick auf die Art und Anordnung der Reinigungsöffnungen behaftet. Die Realisierung der Reinigungsöffnungen an den runden Seitenteilen des Gehäuses ist nur sehr schwer möglich.

Auch die Anbringung von vorderseitigen Inspektionsfenstern für die Inspektion des Innenraums war beim Rundmodell problematisch, weil die Inspektionsfenster über mehrere, luftführende Kanalebenen hinweg angeordnet werden mussten.

Im Rundmodell nach dem Stand der Technik konnte auch eine mehrstufige Abreinigung des zu reinigenden Granulats nur schwer konstruktiv verwirklicht werden. Die Inneneinbauten (Innenkegel, Innenrohr) müssen dabei an der Außenwand befestigt werden, und die hierzu verwendeten Stützkonstruktionen behindern die Partikelströmung im Ringquerschnitt. Deshalb war es schwierig, mit dem bekannten Rohrleitungssichter einen mehrstufigen Aufbau mit mehreren seriell hintereinander angeordneten Reinigungsstufen zu verwirklichen.

Weiterer Nachteil bei dem bekannten, als Rundmodell aufgebauten Rohrleitungssichter war, dass sich ein rundzylindrischer Rohrleitungssichter mit seinen umlaufenden Ringkanälen nicht in einer verschmälerten Ausführungsform realisieren lässt, die in der späteren Beschreibung als "Einkanalausführung" beschrieben ist.

Der rundzylindrische Rohrleitungssichter ist auf einen rotationssymmetrischen Querschnitt angewiesen und eine Halbierung dieses Querschnittes ist deshalb nicht möglich.

Die Behebung von Verstopfungen im Kanalquerschnitt des rundzylindrischen Rohrleitungssichters war problematisch, weil, wenn der Ringquerschnitt an einer bestimmten Stelle verstopft, sich die partikelbehaftete Luft den Weg des geringsten Widerstandes wählt und an dieser Verstopfung vorbeiläuft, wodurch die Verstopfung durch das strömende Medium nicht aufgelöst werden kann. Sie bleibt bestehen.

Wäre hingegen die Möglichkeit gegeben, statt eines Rundkanals einen Flachkanal zu verwenden, würden solche Verstopfungen besser aufgelöst, da der auf einer Seite nachströmenden Produktstrom die Verstopfung besser auflösen kann.

Der Erfindung liegt deshalb ausgehend von der EP 2 465 617 B1 die Aufgabe zugrunde, einen auf einen Ringquerschnitt aufbauenden Rohrleitungssichter so weiterzubilden, dass eine verbesserte Abreinigungsleistung bei geringerem Überriss des Granulats gegeben ist.

Zur Lösung der gestellten Aufgabe ist die Erfindung durch ein Verfahren nach dem unabhängigen Anspruch 1 gekennzeichnet.

Die hierzu verwendete Vorrichtung ist Gegenstand des unabhängigen Anspruches 7.

Merkmal der Erfindung ist, dass ausgehend von dem bekannten Verfahren nach der EP 2 465 617 die Erfindung darin besteht, dass der Produktstrom an der Eingangsseite eines luftschlüssig in der Rohrleitung integrierten Rohrsichters auf einen vom Ringquerschnitt abweichenden Flachquerschnitt aufgespreizt wird.

Mit der gegebenen technischen Lehre ergibt sich der Vorteil, dass statt eines Rundkanalsichters, wie er in der EP 2 465 617 B1 beschrieben wurde, nunmehr ein Flachkanalsichter vorgeschlagen wird, der auch als Flachkanalreiniger bezeichnet wird.

Mit der Ausbildung des bekannten Rundkanalsichters als Flachkanalsichter besteht der Vorteil, dass die strömungsungünstigen Inneneinbauten im Flachkanalsichter nun unmittelbar an zwei einander gegenüber liegenden Wänden im Gehäuse des Flachkanalsichters befestigt werden können und ein schwebender, über abstandshaltende Streben gestützter Inneneinbau, der beim Rundkanalsichter als störend angesehen ist, nunmehr vermieden wird.

Im Flachkanalsichter erfolgt die Halterung der Inneneinbauten über die einander gegenüberliegenden, flachen Gehäuseseitenteile. Die Partikelströmung wird dadurch nicht mehr gestört.

Weil keine Inneneinbauten vorhanden sind, ist ein Abprallen der Partikelströmung an den Inneneinbauten auch nicht mehr gegeben, so dass der Anfall von Spritzkorn (Überriß) entscheidend verringert wird.

Im Flachkanalsichter gelangt die Reinigungsluftmenge über die flachen Seitenteile in den Innenraum, und die Partikelströmung wird dadurch nicht gestört.

Die Reinigbarkeit des Innenraumes (über Wartungsöffnungen in den flachen Seitenteilen) gestaltet sich im Flachkanalsichter erheblich einfacher als im Rundkanalsichter, weil der Innenraum von der dort anliegenden Gehäuseseite direkt zugänglich ist und keinerlei luftführenden Kanalquerschnitte überbrückt werden müssen.

Auch der Einbau eines Inspektionsfensters an der Vorderseite des Gehäuses gelingt beim Flachkanalsichter wesentlich einfacher, weil er von der Außenwand des Gehäuses ausgehend direkt in den Innenraum hinein greifend angebracht werden kann.

Die Ausbildung der erfindungsgemäßen Vorrichtung als Flachkanalsichter hat den weiteren Vorteil, dass auch eine mehrstufige Abreinigung von Feinstaub führenden Granulatströmen ohne weiteres zu verwirklichen ist. Nachdem im Flachkanalsichter die Inneneinbauten an den flachen Seitenteilen des Gehäuses befestigt werden, erfolgt auch bei einer mehrstufigen Ausführung keine Behinderung der Partikelströmung.

In einer Weiterbildung der konstruktiven Ausgestaltung des Flachkanalsichters sind folgende Vorteile gegeben:
A Eine symmetrische Luftverteilung mit Düsenausführung erzeugt eine gerichtete Strömung mit geringer Verwirbelung
   Beim Rundkanalsichter waren einfach nur am Umfang verteilte einfache Reinigungsöffnungen vorhanden, was mit einer verschlechterten Luftführung verbunden war.
B Fixe oder verstellbare Produktabscheidenasen sind vorhanden und verhindern das erneute Mitreißen des Feinanteils in den Produktmassenstrom. Bei der Ringkanalausführung waren jedoch keine fixen oder verstellbaren Produktabscheidenasen vorhanden, was mit einer schlechteren Abscheidewirkung verbunden war.
C Es ist weiterhin vorgesehen, dass der Innenkörper mit seinen Außenwandungen konisch ausgebildet ist, um Flachkanäle gleichen Querschnittes zu vermeiden. Vielmehr ist der Querschnitt der Flachkanäle konisch sich verengend ausgebildet. Demnach verengen sich die Flachkanäle in Strömungsrichtung an der Anlaufseite und ebenso - jenseits der Reinigungszone - an der Auslaufseite, um in den so profilierten Flachkanälen einen zusätzlichen Düseneffekt zu erzielen.

Dieser Verdränger verhindert den Produkteintritt in den Reingaskanal und führt zu einer verbesserten Strömungsausrichtung. Bei dem bekannten Rundkanalströmungssichter nach der EP 2 465 617 B1 war der Innenkörper jedoch nicht in Strömungsrichtung sich erweiternd ausgebildet, wodurch sich nicht verengende Querschnitte ergaben und damit eine schlechtere Strömungsführung.

Die verwendeten Produktabscheidenasen haben erfindungsgemäß folgende Vorteile:
Die Reinigungsluftmenge lenkt die groben Partikel nur leicht aus ihrer ursprünglichen Flugbahn von rechts nach links in Richtung der Reinigungsluftmenge.

Die kleineren Partikel werden jedoch durch die Reinigungsluftmenge erheblich stärker abgelenkt als die gröberen Partikel.

Sie treffen deshalb auf die angeschrägte Wand des Gehäuses. Ein Teil der Reinigungsluftmenge, zusammen mit den Partikeln, gelangt nach unten in den Rückgasstrom. Ein Teil der Reinigungsluftmenge mit den Partikeln wird nach oben abgelenkt und gelangt wieder zurück in die ursprüngliche Partikelströmung. Dadurch wird die Abscheidung von Feinpartikeln und Grobpartikeln wieder teilweise rückgängig gemacht, wenn eine solche Produktabscheidenase fehlt.

Die Anordnung der Produktabscheidenase verhindert hingegen, dass ein Teil der Reinigungsluftmenge mit den Partikeln wieder nach oben abgelenkt wird. Über eine Einstellvorrichtung können die Produktabscheidenasen in X- und Y-Richtung verstellt werden, d. h. sie können an das abzureinigende Schüttgut in radialer und axialer Richtung angepasst werden.

Wie bereits schon in der Beschreibungseinleitung angegeben, ist bei dem Flachkanalsichter eine Einkanalausführung möglich, was - wie ausgeführt - bei dem Rundkanalsichter nicht möglich war.

Die Einkanalausführung hat gegenüber dem Rundkanalsichter den Vorteil, dass bei Verstopfungen im Kanalquerschnitt die Partikelströmung nicht den Weg des geringsten Widerstandes nehmen kann. Partikel mit hoher Reibung können bei dem bekannten Rundkanalsichter einen Teil des Ringquerschnittes verstopfen. Wenn jedoch erfindungsgemäß eine Einkanalausführung mit nur einem axialen Strömungsweg vorhanden ist, führt die Verstopfung zu einer teilweisen Verlegung dieses einen Kanals. Die an dieser Verstopfung vorbeiströmenden oder auftreffenden Partikel tragen die Verstopfung selbsttätig ab, weil es keinen alternativen Strömungsweg wie beim Rundkanalsichter gibt.

Gegenüber der erfindungsgemäßen Zweikanalausführung hat die erfindungsgemäße Einkanalausführung keine Produktaufteilung zum Ziel, sondern es ist nur ein einziger Produktstrom vorhanden.

Die Reinigungsgasmenge wird über einen Lufterzeuger bereitgestellt. Dies ist Gegenstand der EP 2 465 617 B1 und im Übrigen gelten für alle gleichen Bezugszeichen, die in der vorliegenden Erfindungsbeschreibung verwendet wurden, die gleiche Beschreibung wie in der EP 2 465 617 B1. Die externe Lufterzeugung ist gleich wie bei der EP 2 465 617 B1. Die Regelung der Reinigungsgasmenge kann manuell - z. B. über Handklappen - erfolgen oder über eine automatische Gasmengenregelung in Abhängigkeit z. B. vom Druck in der Förderleitung oder der Menge des Fördergasstrom oder der Menge des Überriss.

Genau wie in der EP 2 465 617 B1 beschrieben kann auch bei der vorliegenden Erfindung ein "Pipe-Inlineseparator" verwendet werden, mit dem Staub und Granulat über einen Abscheider (z. B. Filter oder Zyklon) aus dem Rückgasstrom entfernt werden.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schnitt durch einen Flachkanalsichter in einer einstufigen Ausführungsform in stark schematisierter Darstellung
- Figur 1a:: Querschnitt durch einen Flachkanal
- Figur 1b:: perspektivische Ansicht des Übergangsquerschnittes
- Figur 2:: ein gegenüber Figur 1 präzisiertes Ausführungsbeispiel eines erfindungsgemäßen Rohrleitungssichters mit Darstellung von Einzelheiten, die in der Figur 1 aus zeichnerischen Gründen nicht dargestellt wurden
- Figur 3:: Schnitt gemäß der Linie III-III in Figur 2
- Figur 4:: Schnitt gemäß der Linie IV-IV in Figur 2
- Figur 5:: Schnitt gemäß der Linie V-V in Figur 2
- Figur 6:: Schnitt gemäß der Linie VI-VI in Figur 2
- Figur 7:: eine vergrößerte Detaildarstellung im Schnitt im Bereich der Separationsstufe des in Figur 2 dargestellten Rohrleitungssichters
- Figur 8:: eine Prinzipzeichnung, welche bei Entfall der Abscheidenase die sich dann ergebenden Strömungsverhältnisse zeigt
- Figur 9:: die gleiche Darstellung wie Figur 8 bei Vorhandensein einer Abscheidenase
- Figur 10:: ein gegenüber Figur 1 und 2 abgewandeltes Ausführungsbeispiel eines Rohrleitungssichters, der in einer Einkanalausführung gegeben ist
- Figur 11:: ein gegenüber Figur 1 und 2 abgewandeltes Ausführungsbeispiel, bei dem der in Figur 1 und 2 dargestellte Rohrleitungssichter zweistufig ausgebildet ist

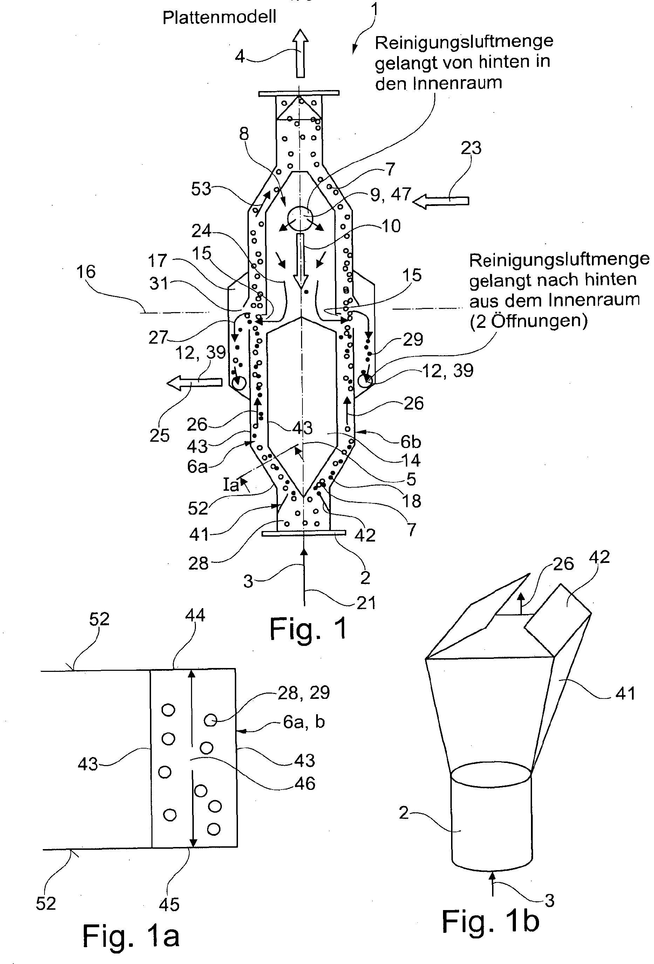

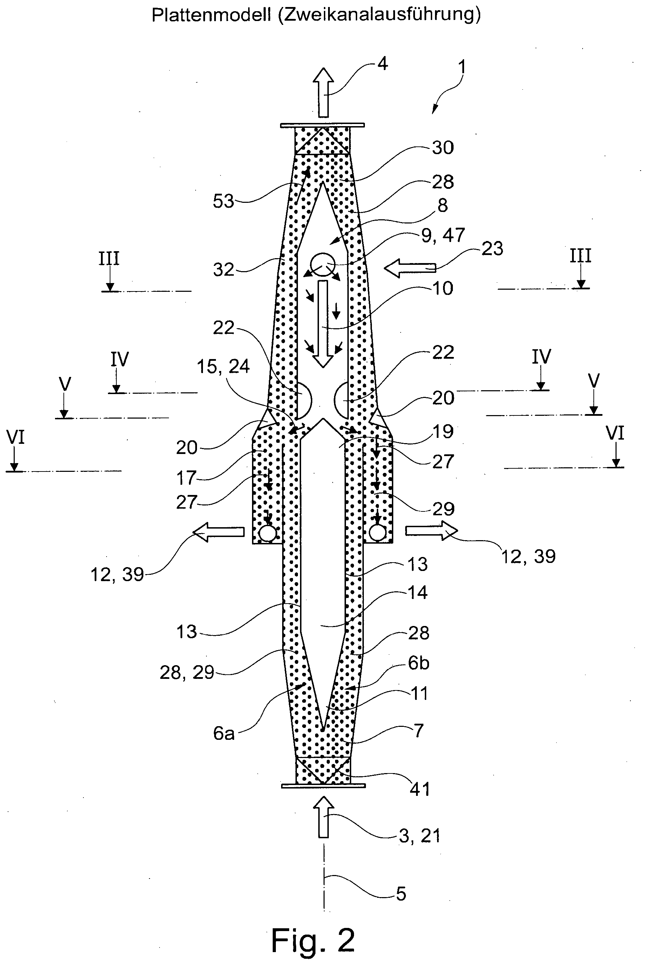

Der in Figur 1 und 2 dargestellte Rohrleitungssichter 1 besteht im Prinzip aus einer rundprofilierten Rohrleitung 2, über die ein Produktstrom 3 an der Eingangsseite in den Flachkanalsichter 1 eingespeist wird, wobei im Produktstrom 3 sowohl Granulatteilchen 28 als Grobgranulat als auch ein Feinanteil 29 eingemischt ist, und zusammen mit der Förderluft 21 mit hoher Geschwindigkeit eingetragen wird.

Nachdem der in den Figuren 1 und 2 dargestellte Flachkanalsichter 1 genau spiegelsymmetrisch zur Mittenlängsachse 5 ausgebildet ist, genügt es, lediglich die eine Seite des Flachkanalsichters 1 zu beschrieben, womit dann alle anderen zu beschreibenden Teile erfasst sind.

Der besseren Übersichtlichkeit halber wurden jedoch an verschiedenen Stellen Teile der linken und der rechten Seite mit Bezugszeichen versehen, obwohl der Aufbau bezüglich der Mittenlängsachse 5 spielsymmetrisch ausgebildet ist.

Es ist vorteilhaft, wenn ausgehend vom zylindrischen Rohrleitungsquerschnitt 2 gemäß Figur 1b nunmehr der Produktstrom 3 auf einen stumpfkegeligen Übergangsquerschnitt 41 expandiert wird und an der Auslassseite dieses stumpfkegeligen Übergangsquerschnittes 41 zugeordnete Einführschienen 42 vorgesehen sind, die schräg gegeneinander gerichtet sind, um so eine fokussierte Aufteilung des von dem Übergangsquerschnitt 41 gelangenden Produktstromes in die zwei zueinander benachbarten Flachkanäle 6a, 6b zu bewerkstelligen.

Die Einführschienen 42 haben somit eine Lenkungs- und Fokussierungsaufgabe, um eine möglichst gleichmäßige Produkteinführung in die beiden voneinander abzweigenden Flachkanäle 6a, 6b zu erreichen.

Die Einführschienen 42 könnten auch entfallen, nur wäre dann die Aufteilungswirkung auf die beiden voneinander abzweigenden Flachkanäle 6a, 6b verschlechtert, ohne der Erfindungsgedanken zu verlassen.

Die beiden Flachkanäle werden durch die Außenwände des Gehäuses 53 gebildet und durch die Außenwände eines im Innenraum des Gehäuses 52 angeordneten Innenkörpers 14, der bevorzugt als Hohlkörper ausgebildet ist.

Wichtig ist nun, dass der Innenkörper 14 keinerlei Befestigungsstreben durch die beiden Flachkanäle 6a, 6b hindurch benötigt, weil er - jeweils beidseitig in der Zeichenebene der Figur 1 - vorder- und rückseitig an zugeordneten Gehäuseflächen des Gehäuses 52 unmittelbar anliegend befestigt.

Es erfolgt demnach eine spaltfreie, direkt an den Gehäuseflächen 52 anliegende Befestigung des Innenkörpers 14 im Gehäuse 52 ohne Verwendung von Streben oder den Produktstrom störenden Einbauten.

Aus Figur 1a wird deutlich, dass die dort schematisiert dargestellten Flachkanäle 6a, 6b mit der Bodenfläche 44 und der gegenüberliegenden Deckfläche 45 direkt an zugeordneten Flächen des Gehäuses 52 anliegen und dort befestigt sind, so dass - wie ausgeführt - auf die Anordnung von Streben oder sonstige den Strömungsquerschnitt behindernde Einbauten verzichtet werden kann.

In Figur 1a wird auch noch erläutert, dass bevorzugt die Länge der Seitenwände 43 größer ist als die Länge der Bodenfläche und der Deckfläche 44, 45, so dass sich ein Rechteckprofil ergibt.

Aus konstruktiven Gründen wird ein Rechteckprofil für die Flachkanäle 6a, 6b bevorzugt. Hierauf ist die Erfindung jedoch nicht beschränkt.

Statt eines solchen Rechteckprofils kann auch jedes andere Profil verwendet werden, welches wenigstens eine gehäusenahe Flachseite aufweist, wie z. B. ein Quadratprofil, ein Ovalprofil, ein mehreckiges Profil oder auch asymmetrische Profilformen. Demnach kommt es nur darauf an, dass die einander gegenüberliegenden Flächen 44, 45 direkt zwischen den Gehäusewänden des Gehäuses 52 aufgenommen sind und daher auf störende Einbauten verzichtet werden kann.

Der im Innenraum nunmehr unmittelbar an den Gehäusewänden des Gehäuses 52 befestigte Körper 14 bildet mit seiner unteren Konusspitze, welche teilweise in den Übergangsquerschnitt 41 eingreift, einen Verzweigungskanal 7, von dem die beiden Flachkanäle 6a, 6b ausgehen.

Es ist ein weiterer Einbaukörper im oberen Teil des Flachkanalsichters 1 vorhanden, der als Zuführkammer 8 ausgebildet ist. Es handelt sich um einen hohlen Kanalquerschnitt, der die in Figur 1 die dargestellte Formgebung aufweist und der die Reinigungsluft 9 mit einem Anschlussstutzen 47 einführt.

Die Reinigungsluft 9 strömt in den Innenraum der Zuführkammer 8 in den dargestellten Pfeilrichtungen und strömt schließlich in der Pfeilrichtung 24 in die Separationsstufe, wie später noch erläutert wird.

Die Reinigungsluft 9 strömt somit in Pfeilrichtung 10 nach unten in Richtung auf die Separationsstufe.

Wie bereits schon vorhin ausgeführt, führt die untere Konusspitze 11 des Innenkörpers 14 zu einer Aufteilung der Ströme in die Flachkanäle 6a, 6b hinein, wonach dann die Produktströme in den Pfeilrichtungen 26 getrennt voneinander der Reinigungsebene zufließen.

Die beiden zueinander parallelen Flachkanäle 6a, 6b münden in die Reinigungsebene 16 und am radialen Außenumfang der Flachkanäle 6a, 6b ist in diesem Bereich eine ebenfalls rechteckig profilierte Sammelkammer 17 angeordnet, aus der ein Rückgasstrom 12 in den Pfeilrichtungen 25 aus dem gegenüberliegenden Auslassstutzen 39 herausströmt.

Die Figur 1 zeigt den Innenkörper 14 lediglich schematisiert, und in einer Weiterbildung der Formgebung dieses Innenkörpers 14 zeigt die Figur 2, dass die einander gegenüberliegenden Mantelflächen 13 des Innenkörpers 14 sich konisch erweitern, um dafür zu sorgen, dass sich die beiden einander gegenüberliegenden Flachkanäle 6a, 6b konisch im Bereich der Reinigungsebene 16 vereinigen.

Damit wird eine verbesserte Strömungsausrichtung im Sinn einer verbesserten Zielwirkung erreicht.

Die obere Zuführkammer 8 ist in Richtung axial nach unten und in Richtung auf den im Abstand darunter angeordneten Innenkörper 14 geöffnet und weist Reinigungsschlitze 15 auf, welche die in den Pfeilrichtungen 23 eingeströmte Luft, die über den Anschlussstutzen 47 eingeführt wurde, in der Pfeilrichtung 10 nach unten strömen lässt und dabei einen düsenartigen Querschnitt durchströmt, der durch zwei entgegengesetzt gerichtete Düsenkörper 22 gebildet ist.

Damit wird - gemäß dem Prinzip einer Lavaldüse - ein Beschleunigungseffekt erzielt, weil stromaufwärts des Düsenkörpers 22 eine Komprimierung der Luft stattfindet.

Eine Lavaldüse ist ein Strömungsorgan, bei dem sich der Querschnitt zunächst verengt und anschließend weitet, wobei der Übergang von einem zum anderen Teil stetig erfolgt. Die Querschnittsfläche ist üblicherweise an jeder Stelle kreis- oder ellipsenförmig.

Sobald die Reinigungsluft in Pfeilrichtung 10 die beiden den Querschnitt verengenden Düsenkörper 22 passiert hat, expandiert diese und es kommt zu einer höheren Strömungsgeschwindigkeit.

Somit wird mit den Düsenkörpern 22 nicht nur eine bestimmte Strömungsbeeinflussung erreicht, sondern zusätzlich auch eine gezieltere Strömungsrichtung auf die Konusspitze 19 des entgegengesetzt gerichteten Innenkörpers 14. Der Reinigungsluftstrom wird somit in Pfeilrichtung 24 an der Konusspitze 19 umgeleitet und gelangt in den Bereich der Reinigungsschlitze 15.

Die Reinigungsschlitze 15 sind durch den Auslauf an der Zuführkammer 8 und gegenüberliegend durch die Konusspitze 19 des Innenkörpers 14 gebildet.

Es werden demnach zwei bezüglich der Mittenlängsachse 5 getrennte Düsenquerschnitte gebildet, weil die Pfeilrichtungen 24 entgegen gesetzt nach links und rechts zeigen, wodurch die Abscheidung jeweils in der Reinigungsebene 16 stattfindet.

Der vorher aus groben Granulatteilchen 28 und einem Feinanteil 29 bestehende Produktstrom 18 wird nun in einen Feinanteil 29 separiert, der durch den Auslassstutzen 39 und mit dem Rückgasstrom 12 abgezogen wird und in einen Grobproduktstrom, der nur noch die groben Granulatteilchen 28 an eine am Auslauf befindliche Expansionskammer 30 einleitet und schließlich als Produktstrom die Ausgangsseite 4 verlässt.

Ein Merkmal der Erfindung ist, dass an der Innenseite der Sammelkammer 17 in den Produktstrom schräg hinein ragende Abscheidenasen 20 angeordnet sind, deren Wirkung anhand der späteren Figuren beschrieben wird.

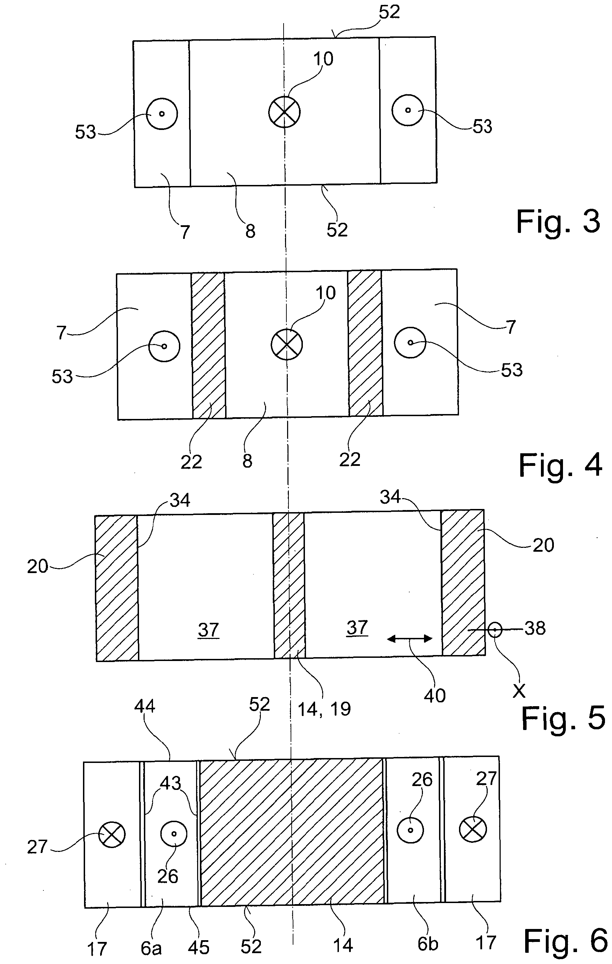

Die Figuren 3 bis 6 zeigen die verschiedenen Schnitte durch den erfindungsgemäßen Flachkanalsichter, wo erkennbar ist, dass sämtliche Einbauten links und rechts an den Gehäusewänden des Gehäuses 52 befestigt sind. Hieraus ergibt sich der erfindungsgemäße Vorteil eines Flachkanalsichters gegenüber dem bekannten Rundkanalsichter, weil nunmehr alle Einbauten gemäß Figur 3 bis Figur 6 an den jeweils gegenüberliegenden Gehäusewänden des Gehäuses 52 befestigt sind.

In Figur 6 sind die Produktströme mit den Pfeilrichtungen 26, 27 eingetragen, wo erkennbar ist, dass keinerlei störende Einbauten im Querschnitt der Flachkanäle vorhanden sind.

Während die Figur 3 einen Schnitt gemäß der Linie III-III im oberen Teil des Flachkanalsichters 1 zeigt, zeigt die Figur 4 einen Schnitt gemäß der Linie IV-IV durch die Separationsstufe, wobei die Schnittführung durch die Spitze der Düsenkörper 22 verläuft. Der Düsenkörper ist als rund konturiertes Blechteil ausgeführt.

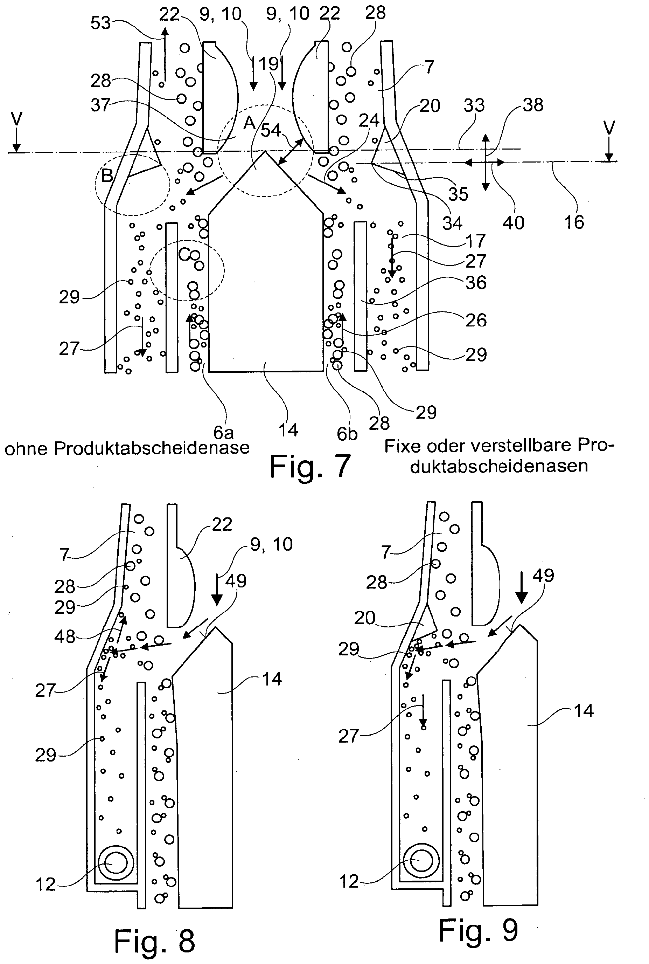

Die Figur 5 zeigt den Schnitt durch die Abscheidenasen 20, die lediglich als flache Blechkanten ausgebildet sind, und die Figur 5 zeigt in Verbindung mit der späteren Figur 7, dass die Abscheidenasen sowohl in X- als auch in Y-Richtung in den Pfeilrichtungen 38, 40 einstellbar und feststellbar ausgebildet sind.

Die jeweiligen Strömungsverhältnisse sind mit Pfeilen eingetragen.

Die Figur 7 zeigt die wesentlichen Merkmale der Erfindung, wobei die Detailkreise A, B und C in der allgemeinen Beschreibung mit diesen Buchstaben A, B und C erwähnt wurden.

Vorteilhaft ist, wenn der aus dem Flachkanal 6a, 6b in Pfeilrichtung 26 nach oben strömende Produktstrom, in dem die Granulatteilchen 28 und der Feinanteil 29 enthalten sind, nunmehr an den sich verengenden Außenwänden des Innenkörpers 14 entlang strömen, wodurch sich der Flachkanal 6a, 6b in Richtung zur Ausströmseite verengt und damit eine verbesserte Richtungswirkung des Luftstromes in die Reinigungsebene 16 gegeben ist.

Von oben her strömt die Reinigungsluft 9 in Pfeilrichtung 10 nach unten und muss zunächst die sich verengenden Düsenkörper 22 passieren, wo sie komprimiert wird und am Auslauf der Düsenkörper 22 expandiert und damit mit hoher Luftgeschwindigkeit auf die Konusspitze 19 des Innenkörpers 14 gelenkt wird.

An der Konusspitze 19 wird sie in Pfeilrichtung 24 schräg nach außen abgelenkt, wie dies in Pfeilrichtung 24 gezeigt ist. Es erfolgt also eine radial nach außen gerichtete Ablenkung und aufgrund dieser Querströmung in Pfeilrichtung 24 gelangt der Feinanteil der Reinigungsluftmenge unterhalb einer Spitze 34 der Abscheidenase 20 und strömt an der schräg nach unten gerichteten Abweiskante 35 entlang in die Sammelkammer 17.

Das Vorhandensein der Abscheidenase 20 verbessert demnach die Separation zwischen den groben Granulatteilchen 28 und dem Feinanteil 29, weil ein Mitreißen des Feinanteils 29 in den Verzweigungskanal 7 verhindert wird.

Die Abscheidenasen 20 bilden für den Feinanteil 29 eine nicht überwindbare Stufe oder ein Strömungshindernis, der deshalb an der Spitze 34 abgeteilt und entlang der Abweiskante 35 nach unten in Pfeilrichtung 27 in die Sammelkammer 17 abgeleitet wird.

Die Abscheidenase 20 mit ihrer Spitze 34 ist in den Pfeilrichtungen 38, 40 (X-Y-Richtung) einstellbar ausgebildet. Im gezeigten Ausführungsbeispiel liegt die Ebene der Spitze 34 unterhalb der Spitzenebene 33 der Konusspitze 19 des Innenkörpers 14. Ebenso liegt das Auslaufende der Düsenkörper 22 etwa auf gleicher Ebene wie die Ebene, welche die Konusspitze 19 bildet.

Die Figur 8 zeigt die vorteilhafte Wirkung der Anordnung von Abscheidenasen 20, weil die Figur 8 bei Entfall der Abscheidenasen 20 zeigt, dass der Reinigungsluftstrom 9, der in Pfeilrichtung 10 nach unten strömt, über die Spitzenfläche 49 der Konusspitze 19 abgeleitet wird und schräg nach außen entsprechend der eingezeichneten Pfeilrichtung gelangt. An dieser schrägen Gehäusewand erfolgt nun eine - an sich unerwünschte - Aufteilung in Pfeilrichtung 48 nach oben und in Pfeilrichtung 27 nach oben, wobei in der Pfeilrichtung 48 in unerwünschter Weise auch noch ein Feinanteil 29 nach oben in den Verzweigungskanal 7 mitgerissen wird. Der Erfindungsgedanke umfasst jedoch auch Ausführungen eines Flachkanalsichters, bei dem die Abscheidenasen 20 fehlen.

Das Vorhandensein von Abscheidenasen 20 wird jedoch bevorzugt. Die in Figur 9 dargestellte Abscheidenase 20 hat demnach eine Stau- oder Sperrwirkung, weil der - mit kleinerem Durchmesser gezeichnete - Feinanteil 29 von der Abscheidenase 20 nach unten in Pfeifrichtung 25 abgewiesen wird, während nur noch der Grobanteil, nämlich die Granulatteilchen 28, in den Verzweigungskanal 7 abgeleitet werden.

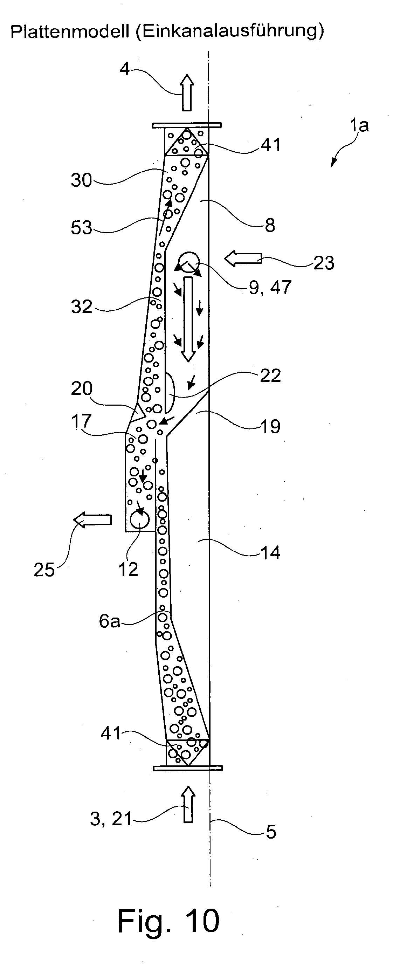

Die Figur 10 zeigt im Vergleich zu der doppelsymmetrischen Ausbildung der Figur 2 (Spiegelsymmetrie zur Mittenlängsachse), dass auch eine einfache Aufsplittung der Vorrichtung an der Mittenlängslinie möglich ist. Der so gestaltete Aufbau eines Flachkanalsichters wird als Einkanalausführung bezeichnet. Dies ist mit dem Flachkanalsichter 1a in Figur 10 dargestellt.

Für die gleichen Teile gelten die gleichen Bezugszeichen, und es handelt sich um eine besonders einfache Ausführung, die konstruktiv sehr kostengünstig auszuführen ist und mit hohem Wirkungsgrad arbeitet. Es ist eine wesentlich geringere Baugröße vorhanden, es entsteht dadurch eine kompaktere Bauweise und sich ansammelnde Verstopfungen werden problemlos automatisch durch den an der Verstopfung vorbei strömenden Produktstrom beseitigt.

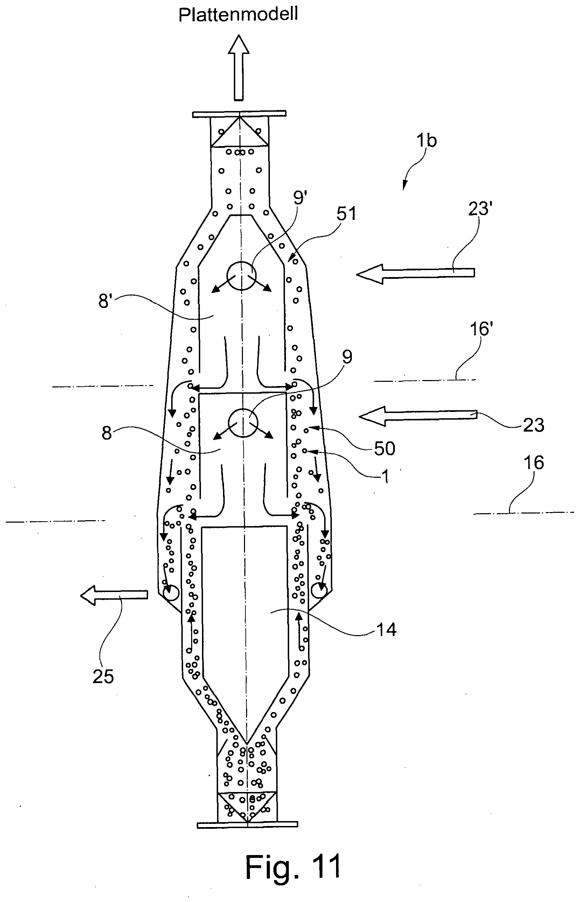

Die Figur 11 zeigt einen weiteren Flachkanalsichter 1b, der im Vergleich zu dem Flachkanalsichter 1 nach Figur 1 und Figur 2 nunmehr zweistufig ausgebildet ist. Für die gleichen Teile gelten die gleichen Bezugszeichen.

Auf den im unteren Teil der Figur 11 dargestellten Flachkanalsichter 1, der den Figuren 1 und 2 entspricht, ist demnach eine gleich, weitere Stufe aufgesetzt, sodass sich insgesamt ein zweistufiger Flachkanalsichter 1b ergibt.

Es ergeben sich dadurch zwei voneinander getrennte und zueinander parallele Reinigungsebenen 16, 16', wobei nur die wichtigsten Teile dieser beiden Stufen mit Bezugszeichen bezeichnet sind, weil alle Teile bereits schon beim einstufigen Flachkanalsichter beschrieben wurden.

Für beide Reinigungsebenen 16, 17, 16' sind alle Merkmale in gleicher Weise vorhanden, wie sie anhand der Figur 7 beschrieben wurden.

Selbstverständlich ist es auch möglich, den als zweistufig ausgebildeten Flachkanalsichter 1b auch zweistufig in der Einkanal-Ausführung auszubilden, wie es in Figur 10 dargestellt ist.

Einem solchen in Figur 10 dargestellten Einkanal-Flachkanalsichter kann deshalb auch eine zweite Stufe aufgesetzt werden, wie dies anhand der Figur 11 dargestellt wurde.

Statt der Anwendung von zwei Stufen mit zwei voneinander beabstandet angeordneten Reinigungsebenen 16, 16' können selbstverständlich auch mehr als zwei Stufen hintereinander liegend angeordnet werden.

Wichtig ist, dass eine Hauptreinigung in der Reinigungsebene 16 stattfindet und eine Nachreinigung in der darauf folgenden weiteren Stufe im Bereich der Reinigungsebene 16' stattfindet.

Deshalb kann die Anzahl der Stufen mit entsprechender Nachreinigung in beliebiger Weise erweitert werden.

Die Zusatzstufe 51 kann demnach in beliebiger Anzahl auf eine Grundstufe 50 aufgesetzt werden und so betrieben werden.

In Figur 7 ist dargestellt, dass die beiden einander gegenüber liegenden Düsenkörper 22 zwei entgegengesetzt gerichtete Beschleunigungsdüsen 37 ausbilden.

In einer anderen Ausführung kann es jedoch auch vorgesehen sein, dass die Düsenkörper 22 entfallen, wobei dadurch nur die Düsenwirkung im Bereich der Beschleunigungsdüse 37 verringert werden würde.

Der Abstand 54 zwischen der Mantelfläche der Konusspitze 19 und der gegenüberliegenden Unterkante des Düsenkörpers 22 beeinflusst die Strömungsgeschwindigkeit in Pfeilrichtung 24.

Je höher die Strömungsgeschwindigkeit ist, desto größer wird die Abscheidewirkung und gleichzeitig erhöht sich aber auch der unerwünschte Überriss, so dass der Abstand 54 genau auf das Produkt und die Produktgröße sowie auf andere Eigenschaften des granulären Schüttguts abgestimmt werden muss.

Das Bezugszeichen 46 bezeichnet in Figur 1a die Kanaltiefe, was heißt, dass ein Flachkanal in einer Rechteckprofilform bevorzugt wird. Es kann jedoch auch eine Quadratform oder jegliche beliebige andere Form gewählt werden, wobei nur entscheidend ist, dass eine ausreichende Befestigungsfläche im Bereich der Boden- und der Deckfläche 44, 45 vorhanden ist, um eine gegenüber liegende Befestigung an den einander gegenüberliegenden Gehäusewänden des Gehäuses 52 zu ermöglichen.

### Zeichnungslegende

- 1: Flachkanalsichter 1a, 1b
- 2: Rohrleitung
- 3: Produktstrom-Eingangsseite
- 4: Produktstrom-Ausgangsseite
- 5: Mittenlängsachse
- 6: Flachkanal 6a, 6b
- 7: Verzweigungskanal
- 8: Zufuhrkammer (für 9)
- 9: Reinigungsluft
- 10: Pfeilrichtung
- 11: Konusspitze (von 14)
- 12: Rückgasstrom
- 13: Mantelfläche (von 14)
- 14: Innenkörper
- 15: Reinigungsschlitz
- 16: Reinigungsebene 16'
- 17: Sammelkammer
- 18: Produktstrom
- 19: Konusspitze (von 14)
- 20: Abscheidenase
- 21: Förderluft
- 22: Düsenkörper
- 23: Pfeilrichtung
- 24: Pfeilrichtung
- 25: Pfeilrichtung
- 26: Pfeilrichtung
- 27: Pfeilrichtung
- 28: Granulatteilchen
- 29: Feinanteil (von 28)
- 30: Expansionskammer
- 31: Abscheideöffnung
- 32: Kompressionskammer
- 33: Spitzenebene (von 19)
- 34: Spitze (von 20)
- 35: Abweiskante
- 36: Kammerwand
- 37: Beschleunigungsdüse
- 38: Pfeilrichtung (für 20)
- 39: Auslassstutzen
- 40: Pfeilrichtung (für 20)
- 41: Übergangsquerschnitt
- 42: Einführschiene
- 43: Seitenwand
- 44: Bodenfläche
- 45: Deckfläche
- 46: Tiefe
- 47: Anschlussstutzen (für 9)
- 48: Pfeilrichtung
- 49: Spitzenfläche
- 50: Grundstufe
- 51: Zusatzstufe
- 52: Gehäuse
- 53: Pfeilrichtung
- 54: Abstand

## Patentansprüche

1. Verfahren zur Abscheidung von feinen Partikeln (29) aus granulatförmigen Schüttgütern, die als Produktstrom (18) mittels Flug- oder Dünenförderung in einer Rohrleitung (2) gefördert werden, wobei der Produktstrom (18) an der Eingangsseite eines luftschlüssig in der Rohrleitung (2) integrierten Sichters (1, 1a) radial aufgespreizt wird und dort im Bereich einer Reinigungsebene (16, 16') von einem im Winkel zur Richtung des aufgespreizten Produktstromes (18) strömenden Reinigungsluftstrom (9) durchsetzt wird, der die im Produktstrom (18) mitgeführten, leichteren Partikel, Fäden, Nester, Staub oder dgl. aus der Flugbahn der schwereren Granulatteilchen (28) ablenkt und in einen von der Reinigungsluft (9) durchströmte Sammelkammer (17) fördert, **dadurch gekennzeichnet, dass** der Sichter als Flachkanalsichter (1, 1a) ausgebildet ist, dessen eingangsseitiger Produktstrom (3, 18) auf mindestens einen Flachquerschnitt aufgespreizt wird und dass des Flachkanalsichter (1, 1a) eingangsseitiger Produktstrom (3, 18) über einen kegeligen Übergangsquerschnitt (41) auf mindestens einen Flachkanal (6a, 6b) durch eine Konusspitze (11) eines Innenkörpers (14) aufgespreizt wird und dass der Innenkörper (14) mit seinen einander gegenüberliegenden Wänden unmittelbar an den einander gegenüberliegenden Gehäusewänden des Gehäuses (52) des Flachkanalsichters (1, 1a) befestigt ist.

2. Verfahren nach Anspruch 1, **dadurch gekennzeichnet, dass** die Aufspreizung von dem Rundquerschnitt der Rohrleitung auf den Flachquerschnitt über einen rechteckig profilierten Übergangsquerschnitt (41) erfolgt, dessen Ausströmseite in mindestens einen Flachkanal (6a, 6b) mündet.

3. Verfahren nach Anspruch 1 oder 2, **dadurch gekennzeichnet, dass** im Bereich der Flachkanäle (6a, 6b) eine in Strömungsrichtung sich ergebende Komprimierung des Produktstroms (3, 18) vor Erreichung der Reinigungsebene (16, 16') stattfindet.

4. Verfahren nach einem der Ansprüche 1 bis 3, **dadurch gekennzeichnet, dass** auch auf der Ausgangsseite des Flachkanalsichters (1, 1a) stromab der Reinigungsebene (16, 16') ein sich in Strömungsrichtung ergebende Komprimierung des Produktstroms (4) stattfindet.

5. Verfahren nach einem der Ansprüche 1 bis 4, **dadurch gekennzeichnet, dass** die in den Innenraum einer Zuführkammer (8) eintretende Reinigungsluft (9) Düsenkörper (22) durchströmt, die eine Lavaldüse bilden, bevor sie in die Reinigungsebene (16, 16') gelangt.

6. Vorrichtung zur Abscheidung von feinen Partikeln (29) aus granulatförmigen Schüttgütern, die als Produktstrom (18) mittels Flug- oder Dünenförderung in einer Rohrleitung (2) der Vorrichtung gefördert werden, wobei der Produktstrom (18) an der Eingangsseite eines luftschlüssig in der Rohrleitung (2) integrierten Sichters (1, 1a) radial aufgespreizt wird und dort im Bereich einer Reinigungsebene der Vorrichtung (16, 16') von einem im Winkel zur Richtung des aufgespreizten Produktstromes (18) strömenden Reinigungsluftstrom (9) aus einer Zuführkammer (8) durchsetzt wird, der die im Produktstrom (18) mitgeführten, leichteren Partikel, Fäden, Nester, Staub oder dgl. aus der Flugbahn der schwereren Granulatteilchen (28) ablenkt und in einen von der Reinigungsluft (9) durchströmte Sammelkammer (17) der Vorrichtung fördert, **dadurch gekennzeichnet, dass** der Sichter als ein-oder mehrstufiger Flachkanalsichter (1, 1a) ausgebildet ist, dessen eingangsseitiger Produktstrom (3, 18) über einen kegeligen Übergangsquerschnitt (41) der Vorrichtung auf mindestens einen Flachkanal (6a, 6b) der Vorrichtung durch eine Konusspitze (11) eines Innenkörpers (14) der Vorrichtung aufgespreizt wird und dass der Innenkörper (14) mit seinen einander gegenüberliegenden Wänden unmittelbar an den einander gegenüberliegenden Gehäusewänden des Gehäuses (52) des Flachkanalsichters (1, 1a) befestigt ist.

7. Vorrichtung nach Anspruch 6, **dadurch gekennzeichnet, dass** der Innenkörper (14) eine in axialer Richtung sich von der Einström- zur Ausströmrichtung des Produktstromes (18) sich konisch erweiternde Mantelfläche (13) aufweist.

8. Vorrichtung nach Anspruch 6 oder 7, **dadurch gekennzeichnet, dass** auch die die Ausströmseite des Sichters bildende Zuführkammer (8) eine von der Einström- zur Ausströmrichtung des Produktstromes (18) sich konisch verengende Mantelfläche aufweist.

9. Vorrichtung nach einem der Ansprüche 6 bis 8, **dadurch gekennzeichnet, dass** der Flachkanal (6a, 6b) einen rechteckförmigen oder quadratischen oder polygonalen (mehreckigen) oder ovalen Querschnitt hat.

10. Vorrichtung nach einem der Ansprüche 6 bis 9, **dadurch gekennzeichnet, dass** die Flachkanäle (6a, 6b) in die Reinigungsebene 16 münden und dass am radialen Außenumfang der Flachkanäle (6a, 6b) ist in diesem Bereich eine rechteckig profilierte Sammelkammer (17) angeordnet ist, aus der ein Rückgasstrom (12) aus einem gegenüberliegenden Auslassstutzen (39) herausströmt.

11. Vorrichtung nach einem der Ansprüche 6 bis 10, **dadurch gekennzeichnet, dass** eine obere Zuführkammer (8) in Richtung axial nach unten und in Richtung auf den im Abstand darunter angeordneten Innenkörper (14) geöffnet ist und Reinigungsschlitze (15) aufweist, welche die über einen Anschlussstutzen (47) eingeströmte Luft einen düsenartigen Querschnitt durchströmt, der durch zwei entgegengesetzt gerichtete Düsenkörper (22) als Lavaldüse ausgebildet ist.

12. Vorrichtung nach einem der Ansprüche 6 bis 11, **dadurch gekennzeichnet, dass** der vorher aus groben Granulatteilchen (28) und einem Feinanteil (29) bestehende Produktstrom (18) mit seinem davon separierten Feinanteil (29) durch einen Auslassstutzen (39) und mit dem Rückgasstrom (12) abziehbar ist und dass die groben Granulatteilchen (28) in eine am Auslauf befindliche Expansionskammer (30) einleitbar sind und als Produktstrom die Ausgangsseite (4) verlassen können.

13. Vorrichtung nach einem der Ansprüche 6 bis 12, **dadurch gekennzeichnet, dass** an der Innenseite der Sammelkammer (17) in den Produktstrom schräg hinein ragende Abscheidenasen (20) angeordnet sind.

14. Vorrichtung nach Anspruch 13, **dadurch gekennzeichnet, dass** die Abscheidenasen (20) in X- und/oder in Y-Richtung einstellbar ausgebildet sind.

15. Vorrichtung nach einem der Ansprüche 6 bis 14, **dadurch gekennzeichnet, dass** der Flachkanalsichter (1) als doppelkanaliger Sichter mit zwei zueinander parallelen Flachkanälen (6a, 6b) ausgebildet ist.

16. Vorrichtung nach einem der Ansprüche 6 bis 14, **dadurch gekennzeichnet, dass** der Flachkanalsichter (1) als einkanaliger Sichter mit lediglich einem Flachkanal (6a) ausgebildet ist.

17. Vorrichtung nach einem der Ansprüche 6 bis 16 **dadurch gekennzeichnet, dass** der Flachkanalsichter (1, 1a) einstufig ausgebildet ist.

18. Vorrichtung nach einem der Ansprüche 6 bis 16 **dadurch gekennzeichnet, dass** der Flachkanalsichter (1, 1a) mehrstufig ausgebildet ist.

## Claims

1. Method for separating fine particles (29) from granulate-like bulk materials which are conveyed as a product stream (18) by means of air-conveying or dune-conveying in a pipeline (2), wherein the product stream (18) is spread radially on the input side of a sifter (1, 1a) integrated in air-tight manner in the pipeline (2) and is penetrated there in the region of a cleaning plane (16, 16') by a cleaning air stream (9) flowing at an angle to the direction of the spread product stream (18) which deflects the lighter particles, threads, nests, dust or the like entrained in the product stream (18) from the trajectory of the heavier granulate particles (28) and conveys them into a collecting chamber (17) flowed through by the cleaning air (9), **characterised in that** the sifter is configured as a flat channel sifter (1, 1a), the input-side product stream (3, 18) of which is spread onto at least one flat cross-section and **in that** the input-side product stream (3, 18) is spread onto at least one flat channel (6a, 6b) of the flat channel sifter (1, 1a) through a conical tip (11) of an inner body (14) via a conical transition cross-section (41) and **in that** the inner body (14) is attached by its walls opposite one another directly to the housing walls opposite one another of the housing (52) of the flat channel sifter (1, 1a).

2. Method according to claim 1, **characterised in that** the spreading by the round cross-section of the pipeline onto the flat cross-section is effected via a rectangularly profiled transition cross-section (41), the outflow side of which leads into at least one flat channel (6a, 6b).

3. Method according to claim 1 or 2, **characterised in that** in the region of the flat channels (6a, 6b), compression of the product stream (3, 18) resulting in the direction of flow takes place before reaching the cleaning plane (16, 16').

4. Method according to one of claims 1 to 3, **characterised in that** compression of the product stream (4) resulting in the direction of flow takes place even on the output side of the flat channel sifter (1, 1a) downstream of the cleaning plane (16, 16').

5. Method according to one of claims 1 to 4, **characterised in that** the cleaning air (9) entering the interior of a supply chamber (8) flows through nozzle bodies (22) which form a Laval nozzle before it reaches the cleaning plane (16, 16').

6. Device for separating fine particles (29) from granulate-like bulk materials which are conveyed as a product stream (18) by means of air-conveying or dune-conveying in a pipeline (2) of the device, wherein the product stream (18) is spread radially on the input side of a sifter (1, 1a) integrated in air-tight manner in the pipeline (2) and is penetrated there in the region of a cleaning plane of the device (16, 16') by a cleaning air stream (9) flowing at an angle to the direction of the spread product stream (18) from a supply chamber (8) which deflects the lighter particles, threads, nests, dust or the like entrained in the product stream (18) from the trajectory of the heavier granulate particles (28) and conveys them into a collecting chamber (17) of the device flowed through by the cleaning air (9), **characterised in that** the sifter is configured as a single-stage or multiple-stage flat channel sifter (1, 1a), the input-side product stream (3, 18) of which is spread onto at least one flat channel (6a, 6b) of the device through a conical tip (11) of an inner body (14) of the device via a conical transition cross-section (41) of the device and **in that** the inner body (14) is attached by its walls opposite one another directly to the housing walls opposite one another of the housing (52) of the flat channel sifter (1, 1a).

7. Device according to claim 6, **characterised in that** the inner body (14) has a generated surface (13) expanding conically in axial direction from the inflow direction to the outflow direction of the product stream (18).

8. Device according to claim 6 or 7, **characterised in that** even the supply chamber (8) forming the outflow side of the sifter has a generated surface narrowing conically from the inflow direction to the outflow direction of the product stream (18).

9. Device according to one of claims 6 to 8, **characterised in that** the flat channel (6a, 6b) has a rectangular or square or polygonal (multi-cornered) or oval cross-section.

10. Device according to one of claims 6 to 9, **characterised in that** the flat channels (6a, 6b) lead into the cleaning plane 16 and **in that** on the radial outer circumference of the flat channels (6a, 6b) is arranged in this region a rectangularly profiled collecting chamber (17), from which a return gas stream (12) flows out from an opposite outlet connection (39).

11. Device according to one of claims 6 to 10, **characterised in that** an upper supply chamber (8) is opened in the direction axially downwards and in the direction of the inner body (14) arranged at a distance therebelow and has cleaning slits (15) which the air run in via a connection (47) flows through a nozzle-like cross-section which is configured as a Laval nozzle by two oppositely directed nozzle bodies (22).

12. Device according to one of claims 6 to 11, **characterised in that** the product stream (18) consisting previously of coarse granulate particles (28) and a fine portion (29) with its fine portion (29) separated therefrom can be drawn through an outlet connection (39) and with the return gas stream (12) and **in that** the coarse granulate particles (28) can be introduced into an expansion chamber (30) located at the outlet and may leave the output side (4) as a product stream.

13. Device according to one of claims 6 to 12, **characterised in that** separating projections (20) projecting at an angle into the product stream are arranged on the inner side of the collecting chamber (17).

14. Device according to claim 13, **characterised in that** the separating projections (20) are configured to be adjustable in the X direction and/or in the Y direction.

15. Device according to one of claims 6 to 14, **characterised in that** the flat channel sifter (1) is configured as a double-channel sifter with two flat channels (6a, 6b) parallel to one another.

16. Device according to one of claims 6 to 14 **characterised in that** the flat channel sifter (1) is configured as a single-channel sifter with only one flat channel (6a).

17. Device according to one of claims 6 to 16, **characterised in that** the flat channel sifter (1, 1a) is configured to have one stage

18. Device according to one of claims 6 to 16, **characterised in that** the flat channel sifter (1, 1a) is configured to have multiple stages.

## Revendications

1. Procédé de séparation de fines particules (29) de produits en vrac granulaires, qui sont transportés dans une conduite tubulaire (2) en tant que flux de produit (18) au moyen d'un transport en suspension ou en amas, dans lequel le flux de produit (18) est écarté radialement sur le côté d'entrée d'un séparateur (1, 1a) intégré avec un raccordement d'air dans la conduite tubulaire (2) et y est traversé, dans la zone d'un niveau de nettoyage (16, 16'), par un flux d'air de nettoyage (9) s'écoulant selon un angle par rapport à la direction du flux de produit (18) écarté, qui dévie de la trajectoire en suspension des particules de granulat plus lourdes (28) les particules plus légères entraînées dans le flux de produit (18), les filaments, les blocs, les poussières ou similaires et les transporte dans une chambre de collecte (17) traversée par le flux d'air de nettoyage (9), **caractérisé en ce que** le séparateur est réalisé en tant que séparateur à canal plat (1, 1a), dont le flux de produit (3, 18) situé côté entrée est écarté sur au moins une section transversale plate, et qu'un flux de produit (3, 18) situé côté entrée du séparateur à canal plat (1, 1a) est écarté par l'intermédiaire d'une section transversale de passage (41) conique sur au moins un canal plat (6a, 6b) par une pointe de cône (11) d'un corps intérieur (14), et que le corps intérieur (14) est fixé par ses parois se faisant face les unes les autres directement sur les parois de boîtier du boîtier (52) se faisant face les unes les autres du séparateur à canal plat (1, 1a).

2. Procédé selon la revendication 1, **caractérisé en ce que** l'écartement est effectué par la section transversale ronde de la conduite tubulaire sur la section transversale plate par l'intermédiaire d'une section transversale de passage (41) profilée de manière rectangulaire, dont le côté de sortie débouché dans au moins un canal plat (6a, 6b).

3. Procédé selon la revendication 1 ou 2, **caractérisé en ce qu'**une compression du flux de produit (3, 18) résultant dans la direction d'écoulement a lieu avant d'atteindre le niveau de nettoyage (16, 16') dans la zone des canaux plats (6a, 6b).

4. Procédé selon l'une des revendications 1 à 3, **caractérisé en ce qu'**une compression du flux de produit (4) résultant dans la direction d'écoulement a lieu également sur le côté de sortie du séparateur à canal plat (1, 1a) en aval du niveau de nettoyage (16, 16').

5. Procédé selon l'une des revendications 1 à 4, **caractérisé en ce que** l'air de nettoyage (9) entrant dans l'espace intérieur d'une chambre d'amenée (8) traverse des corps de tuyère (22), qui forment une tuyère de Laval avant qu'il ne parvienne dans le niveau de nettoyage (16, 16').

6. Dispositif de séparation de particules fines (29) de produits en vrac granulaires, qui sont transportés en tant que flux de produit (18) dans une conduite tubulaire (2) du dispositif au moyen d'un transport en suspension ou en amas, dans lequel le flux de produit (18) est écarté radialement sur le côté d'entrée d'un séparateur (1, 1a) intégré avec un raccordement d'air dans la conduite tubulaire (2) et y est traversé, dans la zone d'un niveau de nettoyage du dispositif (16, 16'), par un flux d'air de nettoyage (9) circulant selon un angle par rapport à la direction du flux de produit (18) écarté, provenant d'une chambre d'amenée (8), qui dévie de la trajectoire des particules de granulat plus lourdes (28) les particules plus légères entraînées dans le flux de produit (18), des filaments, des blocs, des poussières ou similaires et les transporte dans une chambre de collecte (17) du dispositif traversée par l'air de nettoyage (9), **caractérisé en ce que** le séparateur est réalisé en tant qu'un séparateur à canal plat (1, 1a) à un étage ou à étages multiples, dont le flux de produit côté entrée (3, 18) est écarté par l'intermédiaire d'une section transversale de passage (41) conique du dispositif sur au moins un canal plat (6a, 6b) du dispositif par une pointe de cône (11) d'un corps intérieur (14) du dispositif, et que le corps intérieur (14) est fixé par ses parois se faisant face les unes les autres directement sur les parois de boîtier du boîtier (52) se faisant face les unes les autres du séparateur de canal plat (1, 1a).

7. Dispositif selon la revendication 6, **caractérisé en ce que** le corps intérieur (14) présente une surface enveloppante (13) s'élargissant de manière conique dans une direction axiale depuis la direction d'arrivée vers la direction de sortie du flux de produit (18).

8. Dispositif selon la revendication 6 ou 7, **caractérisé en ce que** la chambre d'amenée (8) également formant le côté de sortie du séparateur présente une surface enveloppante se rétrécissant de manière conique depuis la direction d'arrivée vers la direction de sortie du flux de produit (18).

9. Dispositif selon l'une des revendications 6 à 8, **caractérisé en ce que** le canal plat (6a, 6b) a une section transversale de forme rectangulaire ou carrée ou polygonale ou ovale.

10. Dispositif selon l'une des revendications 6 à 9, **caractérisé en ce que** les canaux plats (6a, 6b) débouchent dans le niveau de nettoyage (16), et qu'une chambre de collecte (17) profilée de manière rectangulaire est disposée sur la périphérie extérieure radiale des canaux plats (6a, 6b) dans ladite zone, hors de laquelle sort un flux de retour de gaz (12) provenant d'une tubulure d'évacuation (39) faisant face.

11. Dispositif selon l'une des revendications 6 à 10, **caractérisé en ce qu'**une chambre d'amenée supérieure (8) est ouverte en direction vers le bas axialement et en direction du corps intérieur (14) disposée à distance en dessous et présente des entailles de nettoyage (15) par l'intermédiaire desquelles l'air entrant par l'intermédiaire de la tubulure de raccordement (47) traverse une section transversale de type tuyère, qui est réalisée en tant que tuyère de Laval par deux corps de tuyère (22) dirigés de manière opposée.

12. Dispositif selon l'une des revendications 6 à 11, **caractérisé en ce que** le flux de produit (18) constitué au préalable de particules de granulat grossières (28) et d'une fraction fine (29) peut être retiré avec sa fraction fine (29) séparée de celui-ci par une tubulure de sortie (39) et avec le flux de retour de gaz (12), et que les particules de granulat grossières (28) peuvent être acheminées dans une chambre d'expansion (30) se trouvant sur la sortie et peuvent quitter le côté de sortie (4) en tant que flux de produit.

13. Dispositif selon l'une des revendications 6 à 12, **caractérisé en ce que** des ergots de séparation (20) dépassant de manière oblique à l'intérieur du flux de produit sont disposés sur le côté intérieur de la chambre de collecte (17).

14. Dispositif selon la revendication 13, **caractérisé en ce que** les ergots de séparation (20) sont réalisés de manière réglable dans la direction X et/ou dans la direction Y.

15. Dispositif selon l'une des revendications 6 à 14, **caractérisé en ce que** le séparateur à canal plat (1) est réalisé en tant que séparateur à double canal avec deux canaux plats (6a, 6b) parallèles l'un par rapport à l'autre.

16. Dispositif selon l'une des revendications 6 à 14, **caractérisé en ce que** le séparateur à canal plat (1) est réalisé en tant que séparateur à un canal avec seulement un canal plat (6a).

17. Dispositif selon l'une des revendications 6 à 16, **caractérisé en ce que** le séparateur à canal plat (1, 1a) est réalisé avec un étage.

18. Dispositif selon l'une des revendications 6 à 16, **caractérisé en ce que** le séparateur à canal plat (1, 1a) est réalisé avec plusieurs étages.
